# EUROPÄISCHE PATENTSCHRIFT

(11) **EP 4 097 787 B1**
(45) Veröffentlichungstag und Bekanntmachung des Hinweises auf die Patenterteilung: **27.03.2024**
(21) Anmeldenummer: 21702862.0
(22) Anmeldetag: 14.01.2021
(51) Int. Cl.: H01M 10/052, H01M 50/213, H01M 50/251, H01M 50/291, H01M 50/293, H01M 50/507, H01M 50/509, H01M 10/04

(54) **BATTERIEPACK MIT VERSTÄRKUNGSELEMENTEN**
BATTERY PACK WITH REINFORCING ELEMENTS
BLOC-BATTERIE AVEC ÉLÉMENTS DE RENFORCEMENT

(30) Priorität: 31.01.2020 DE 102020201204
(43) Veröffentlichungstag der Anmeldung: 07.12.2022
(73) Patentinhaber: Viessmann Climate Solutions SE, 35108 Allendorf (DE)
(72) Erfinder: LUDMANN, Clément, 57000 Metz (FR); HOY, Sébastien, 57350 Spicheren (FR); RIEDL, Wolfgang, 57330 Entrange (FR); VALLET, Claude, 57340 Racrange (FR)
(74) Vertreter: MERH-IP Matias Erny Reichl Hoffmann Patentanwälte PartG mbB
(86) Internationale Anmeldenummer: PCT/EP2021/050693
(87) Internationale Veröffentlichungsnummer: WO 2021/151679

(56) Entgegenhaltungen:
- EP-B1- 2 891 195
- US-A1- 2005 031 945
- US-A1- 2012 100 399
- US-A1- 2013 122 341

## Beschreibung

### TECHNISCHES FELD

Die Erfindung betrifft einen Batteriepack, welcher Verstärkungselemente als Kurzschlussschutz während der Fertigung aufweist.

### TECHNISCHER HINTERGRUND

In Zeiten erneuerbarer Energien spielen Energiespeicher insbesondere für Heimanwendungen eine immer größere Rolle. Dies führte bislang zur Entwicklung einer Vielzahl unterschiedlicher Batterietypen, wie z.B. Zink-Mangan-, Zink-Luft-, Quecksilber-Zink- oder Lithium-Ionen-Batterien. Aufgrund der vergleichsweise geringeren Reaktivität und der dadurch höheren Sicherheit sind für Heimanwendungen vor allem Lithium-Eisenphosphat-Batterien von großem Interesse.

Um leistungsstärkere Batterien herzustellen, werden mehrere Batteriezellen in einem Batteriepack zu einer Batterie zusammengefasst, wobei die Zellen in Reihen- und Parallelschaltungen miteinander verschalten sind, um eine gewünschte Spannung und eine gewünschte Kapazität der Batterie zu erreichen. Hierzu werden die Batteriezellen in Zellhaltern gelagert und über entsprechende Zellverbinder miteinander verschalten.

Die EP 2 891 195 B1 zeigt beispielsweise einen Batteriepack, welcher eine Vielzahl von Batteriezellen umfasst. Ein Zellenträger hält die Vielzahl von Batterien und ein Verbindungsteil ist mit der Vielzahl von Batterien verbunden. Ein Schaltungssubstrat wird zum Befestigen von Schaltungen für die Vielzahl von Batterien verwendet. Der Zellenträger ist integral mit Batteriezellenlagereinheiten gebildet, die die Vielzahl von Batterien lagern, einer Basiseinheit, die die Batteriezellenlagereinheiten trägt und Stoßentspannungsrippen. Jede Stoßentspannungsrippe ist zwischen einem Außenumfang der Basiseinheit und einer Außenoberfläche jeder der Batteriezellenlagereinheiten gebildet und in einer Form gestaltet, die fähig ist, in einer Richtung, in der ein Stoß erfolgt, verformt zu werden. Die US 2013/122341 A1, US 2012/100399 A1 und US 2005/031945 A1 offenbaren ebenfalls weitere Beispiele für Batteriepack mit Zellhalter.

Insbesondere die Fertigung von Batteriepacks birgt jedoch nach wie vor Risiken. So können beispielsweise metallische Gegenstände während der Fertigung herabfallen und Kurzschlüsse an den Zellverbindern verursachen. Dies kann etwa beim Einsetzen der Zellverbinder selbst geschehen. Ebenso können aber auch Schrauben und Muttern, welche beispielsweise zur Befestigung von CSC-, T-CSC-Platinen oder eines Gehäuses verwendet werden, auf bereits eingesetzte Zellverbinder fallen und diese kurzschließen. Denkbar ist auch das versehentliche Herabfallen persönlicher Gegenstände von mit der Fertigung eines Batteriepacks betrauten Mitarbeitern.

Eine Aufgabe der Erfindung ist es daher, einen Batteriepack bereit zu stellen, welcher einen verbesserten Kurzschlussschutz während der Fertigung aufweist.

### LÖSUNG DES PROBLEMS

Die Aufgabe wird mit den Merkmalen des unabhängigen Anspruchs 1 und des nebengeordneten Anspruchs 15 gelöst. Die abhängigen Ansprüche sind auf besondere Ausführungsformen der Erfindung gerichtet.

Ein erfindungsgemäßer Batteriepack umfasst eine Vielzahl an Zellhaltern zur Aufnahme von Batteriezellen. Die Zellhalter sind in N Reihen und M Spalten angeordnet und integral miteinander verbunden, so dass eine flächige Batteriezellhalterung gebildet wird, mit M und N jeweils ≥ 3. In einer bevorzugten Ausführungsform können M und N jeweils > 10 sein.

Die Zellhalter sind in vertikaler Richtung offen ausgebildet, so dass beide Pole darin gelagerter Batteriezellen kontaktiert werden können. Das bedeutet, dass der positive Pol einer Batteriezelle auf einer oberen Seite der Batteriezellhalterung kontaktiert werden kann und der negative Pol der gleichen Batteriezelle auf der gegenüberliegenden unteren Seite der Batteriezellhalterung kontaktiert werden kann.

Erfindungsgemäß wird eine Vielzahl an Batteriezellen in den Zellhaltern jeweils gleichpolig innerhalb der N Reihen und gegenpolig innerhalb der M Spalten gelagert. In anderen Worten, die kontaktierbare Polung der Batteriezellen auf jeweils einer Seite der Batteriezellhalterung alterniert mit jeder der N Reihen.

Erfindungsgemäß umfasst der Batteriepack außerdem eine Vielzahl an Zellverbindern, welche beidseitig der Batteriezellhalterung jeweils versetzt über zwei der N Reihen angeordnet sind und die Batteriezellen miteinander verschalten. So können beispielsweise die Batteriezellen der Reihen mit N = 1 und N = 2, N = 3 und N = 4, N = 5 und N = 6 usw. auf der oberen Seite der Batteriezellhalterung über Zellverbinder verschalten sein, wohingegen auf der gegenüberliegenden unteren Seite entsprechend die Batteriezellen der Reihen mit N = 2 und N = 3, N = 4 und N = 5, N = 6 und N = 7 usw. über Zellverbinder verschalten sein können.

Erfindungsgemäß umfasst der Batteriepack überdies eine Vielzahl an Verstärkungselementen, welche zwischen den N Reihen im Abstand von jeweils zwei Reihen angeordnet sind, derart, dass sie die über den jeweils zwei der N Reihen angeordneten Zellverbinder separieren. Die Verstärkungselemente sind dabei in einer Längsrichtung höher ausgebildet, als die Zellhalter.

Durch die Separation der Zellverbinder mittels der Verstärkungselemente kann vorteilhaft ein höherer Schutz gegen Kurzschlüsse während der Fertigung des Batteriepacks erzielt werden, da die Verstärkungselemente als Barriere gegen herabfallende Metallgegenstände dienen. Die Metallgegenstände kommen auf den Verstärkungselementen zu liegen und können somit die Batteriezellen über die Zellverbinder nicht mehr kurzschließen.

In einer bevorzugten Ausführungsform können die Verstärkungselemente integral mit den Zellhaltern verbunden sein. In anderen Worten, in dieser Ausführungsform können die Zellhalter mit den Verstärkungselementen eine einstückige Batteriezellhalterung bilden. Neben der Barrierewirkung kann dadurch vorteilhaft zusätzlich auch die Stabilität des Batteriepacks gegen eine horizontale Verformung verbessert werden, was wiederum die Stapelbarkeit des Batteriepacks verbessert.

In einer überdies bevorzugten Ausführungsform können die Verstärkungselemente als Verstärkungsrippen mit mindestens einem Einschnitt ausgebildet sein. Eine Verstärkungsrippe kann dabei beispielsweise in Art einer Trennwand ausgebildet sein, welche in einem Bereich zwischen angrenzenden Zellhaltern den mindestens einen Einschnitt aufweist. Der technische Effekt des mindestens einen Einschnitts kann dabei mit dem Effekt einer Dehnungsfuge verglichen werden, welche eine Verformung der Batteriezellhalterung, beispielsweise als Reaktion auf Erwärmung/Abkühlung, ausgleichen kann. Besonders bevorzugt können die Verstärkungsrippen zwei Einschnitte aufweisen.

In einer bevorzugten Ausführungsform können die Zellhalter und die Verstärkungselemente aus Kunststoff gefertigt sein. Besonders bevorzugt können die Zellhalter und die Verstärkungselemente aus demselben Kunststoff gefertigt sein.

In einer besonders bevorzugten Ausführungsform kann der Kunststoff Acryl-Butadien-Styrol (ABS) sein.

In einer ganz besonders bevorzugten Ausführungsform können die Zellhalter und die Verstärkungselemente mittels Spritzgussverfahren oder Vakuumgussverfahren gefertigt sein, beispielsweise als einstückige Batteriezellhalterung. In diesem Fall kann der oben genannte mindestens eine Einschnitt die Rheologie des Bauteils während des Herstellungsverfahrens positiv beeinflussen, d.h. etwa eine Verformung der Batteriezellhalterung als Reaktion auf Temperaturunterschiede, beispielsweise in einem Abkühlprozess, verhindern.

In einer weiterhin bevorzugten Ausführungsform können stiftförmige Abstandshalter in Reihe alternierend zu den Verstärkungselementen an den Zellhaltern angeordnet sein. In einer besonders bevorzugten Ausführungsform können sich die Verstärkungselemente in Längsrichtung bis unterhalb der Abstandshalter erstrecken. Mit anderen Worten können die Abstandshalter in Längsrichtung höher ausgebildet sein als die Verstärkungselemente. Bevorzugt können sich die Verstärkungselemente dabei in einen Bereich von 1,0 mm bis 0,2 mm unterhalb der Abstandshalter erstrecken. Ganz besonders bevorzugt können sich die Verstärkungselemente jedoch bis 0,5 mm unterhalb der Abstandshalter erstrecken. Mit anderen Worten können sich die Verstärkungselemente in Längsrichtung in einen Bereich bis oberhalb der Zellhalter und unterhalb der Abstandshalter erstrecken.

Neben den Verstärkungselementen können auch die stiftförmigen Abstandshalter eine Stapelbarkeit des Batteriepacks verbessern. Außerdem kann über derartige Abstandshalter der Abstand zu einem Gehäuse, in welches der Batteriepack eingebaut werden kann, definiert werden. Auf diese Weise kann beispielsweise Kriechstrom vermieden werden. Dies ist insbesondere für die Erfüllung spezifischer Schutzklassen wichtig.

Im Allgemeinen können Batteriezellen in Reihen- und Parallelschaltungen miteinander verschalten werden, um eine gewünschte Spannung und eine gewünschte Kapazität zu erreichen. In einer bevorzugten Ausführungsform können die Batteriezellen M parallel und N seriell verschalten sein. Besonders bevorzugt kann dabei die Schaltung 15 seriell und 16 parallel sein.

Die Art der Batteriezellen ist erfindungsgemäß nicht eingeschränkt. In einer bevorzugten Ausführungsform können die Batteriezellen jedoch kunststoffummantelte Rundzellen sein.

Auch der Typ der Batteriezellen ist erfindungsgemäß nicht eingeschränkt. In einer besonders bevorzugten Ausführungsform können die Batteriezellen jedoch Lithium-Eisenphosphat-Zellen sein. Auf diese Weise kann vorteilhaft die Sicherheit des Batteriepacks erhöht werden, da Lithium-Eisenphosphat-Zellen vergleichsweise weniger reaktiv sind.

Erfindungsgemäß ist die Form der Zellhalter nicht eingeschränkt. In einer überdies bevorzugten Ausführungsform können die Zellhalter jedoch zylindrisch geformt sein. Die zylindrische Form eignet sich vorteilhaft insbesondere zur Lagerung der oben genannten kunststoffummantelten Rundzellen.

In einer weiteren bevorzugten Ausführungsform kann der Batteriepack mindestens 4 Durchführungen für Verbindungselemente aufweisen. Der Begriff Verbindungselemente ist hierin breit auszulegen und kann Elemente sowohl einer Steckverbindung, als auch einer Schraubverbindung umfassen. Bevorzugt sind jedoch Schraubverbindungen, beispielsweise durch Schraube und Mutter. Mittels der Durchführungen kann der Batteriepack beispielsweise mit einem umgebenden Gehäuse verbunden werden.

Verwendet wird der erfindungsgemäße Batteriepack bevorzugt in einem Batteriemodul für Heimanwendungen. Eine solche Heimanwendung umfasst insbesondere modulare Speichersysteme, welche beispielsweise Ein- oder Mehrfamilienhäuser unabhängig vom öffentlichen Stromnetz machen.

### KURZE BESCHREIBUNG DER FIGUREN

Figuren 1 und 2a, 2b zeigen schematisch einen Batteriepack gemäß einer Ausführungsform.
Figur 3 zeigt schematisch ein Verstärkungselement gemäß einer Ausführungsform.
Figur 4 zeigt schematisch einen Ausschnitt eines Batteriepacks mit Abstandshaltern und einem Verstärkungselement gemäß einer Ausführungsform.
Figur 5 zeigt schematisch einen Batteriepack mit Durchführungen für Verbindungselemente gemäß einer Ausführungsform.

### DETAILLIERTE BESCHREIBUNG DER FIGUREN UND BEVORZUGTER AUSFÜHRUNGSBEISPIELE

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrere Merkmale der beschriebenen Beispiele im Rahmen des Schutzumfanges der Ansprüche umfasst sind.

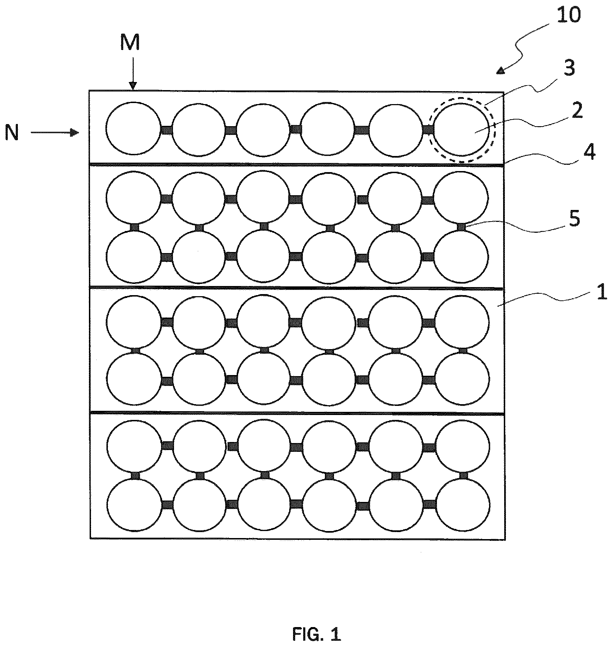

Figur 1 zeigt schematisch einen Batteriepack gemäß einer Ausführungsform. Der Batteriepack 10 umfasst eine Vielzahl an Batteriezellen 2, welche jeweils von entsprechenden Zellhaltern 3 umgeben sind, um die Batteriezellen 2 darin zu lagern. Die Zellhalter 3 sind in N Reihen und M Spalten angeordnet und integral miteinander verbunden, so dass eine flächige Batteriezellhalterung 1 gebildet wird mit M und N jeweils ≥ 3. Die Anzahl der N Reihen und M Spalten ist erfindungsgemäß nicht eingeschränkt und kann entsprechend den Anwendungsanforderungen an den Batteriepack gewählt sein. In einer bevorzugten Ausführungsform können M und N jedoch jeweils > 10 sein. Bevorzugt kann der Batteriepack 10 jedoch auch N = 15 Reihen und M = 16 Spalten an Zellhaltern 3 aufweisen.

Die Zellhalter 3 sind in vertikaler Richtung, d.h. zur oberen und unteren Seite der Batteriezellhalterung 1 hin, offen ausgebildet. Die Batteriezellen 2 können in diesen Zellhaltern 3 beispielsweise über entsprechende Fixierungselemente (nicht gezeigt) gelagert werden. Durch die nach oben und unten offene Ausführung der Zellhalter 3 können die darin gelagerten Batteriezellen 2 beidseitig der Batteriezellhalterung 1 kontaktiert werden, d.h. sowohl der positive Pol, als auch der negative Pol einer Batteriezelle 2 ist kontaktierbar.

Die Form der Zellhalter 3 ist erfindungsgemäß nicht eingeschränkt und kann sich an der Form der darin zu lagernden Batteriezellen 2 orientieren. In einer bevorzugten Ausführungsform können die Zellhalter 3 jedoch zylindrisch geformt sein.

Auch die Art und der Typ der Batteriezellen 2 ist erfindungsgemäß nicht eingeschränkt. In einer bevorzugten Ausführungsform können die Batteriezellen 2 kunststoffummantelte Rundzellen 2 sein.

In einer besonders bevorzugten Ausführungsform können die Batteriezellen 2 überdies Lithium-Eisenphosphat-Zellen sein. Lithium-Eisenphosphat-Zellen weisen dabei den Vorteil auf, dass sie im Vergleich zu anderen Batteriezellen weniger reaktiv und dadurch sicherer sind.

Der Batteriepack 10 weist erfindungsgemäß weiterhin eine Vielzahl an Zellverbindern 5 auf. Zellverbinder dienen im Allgemeinen dazu, Batteriezellen in einem Batteriepack zu einer Batterie zusammenzufassen, wobei die Batteriezellen in Reihen- und Parallelschaltung verschalten werden. Erfindungsgemäß sind Zellverbinder 5 beidseitig der Batteriezellhalterung 1 jeweils versetzt über zwei der N Reihen an Zellhaltern 3 angeordnet, welche die darin gelagerten Batteriezellen 2 miteinander verschalten. Die Art der Verschaltung ist dabei erfindungsgemäß nicht eingeschränkt und kann entsprechend den Anwendungsanforderungen an den Batteriepack gewählt sein. In einer bevorzugten Ausführungsform können die Batteriezellen 2 jedoch M parallel und N seriell verschalten sein. Besonders bevorzugt können die Batteriezellen 16 parallel (16p) und 15 seriell (15s) verschalten sein.

Überdies weist der Batteriepack 10 erfindungsgemäß eine Vielzahl an Verstärkungselementen 4 auf. Die Verstärkungselemente 4 sind zwischen den N Reihen an Zellhaltern 3 im Abstand von jeweils zwei Reihen angeordnet. In einer Längsrichtung sind die Verstärkungselemente 4 höher ausgebildet als die Zellhalter 3, derart, dass sie die über den jeweils zwei der N Reihen angeordneten Zellverbinder 5 separieren. Mit anderen Worten sind Verstärkungselemente 4 alternierend im Abstand von zwei Reihen bezogen auf die über Zellverbinder verbundenen Reihen angeordnet.

Die Verstärkungselemente bieten den Vorteil, dass metallische Gegenstände, welche während der Fertigung des Batteriepacks herabfallen können, nicht mehr über mehrere Zellreihen zu liegen kommen und auf diese Weise einen Kurzschluss verursachen können. Die Verstärkungselemente dienen somit als eine Art Barriere. Überdies können die Verstärkungselemente den Batteriepack, insbesondere die flächige Batteriezellhalterung, auch gegen Verformung verstärken.

In einer bevorzugten Ausführungsform können die Zellhalter 3 und die Verstärkungselemente 4 aus Kunststoff gefertigt sein. Besonders bevorzugt können die Zellhalter 3 und die Verstärkungselemente 4 aus demselben Kunststoff gefertigt sein. In einer besonders bevorzugten Ausführungsform kann der Kunststoff Acryl-Butadien-Styrol (ABS) sein. In einer ganz besonders bevorzugten Ausführungsform können die Zellhalter 3 und die Verstärkungselemente 4 mittels Spritzgussverfahren oder Vakuumgussverfahren gefertigt sein.

In einer überdies bevorzugten Ausführungsform können die Verstärkungselemente 4 integral mit den Zellhaltern 3 verbunden sein. Auf diese Weise kann die Stabilität der Batteriezellhalterung noch weiter erhöht werden und ein mögliches verrutschen der Verstärkungselemente vermieden werden.

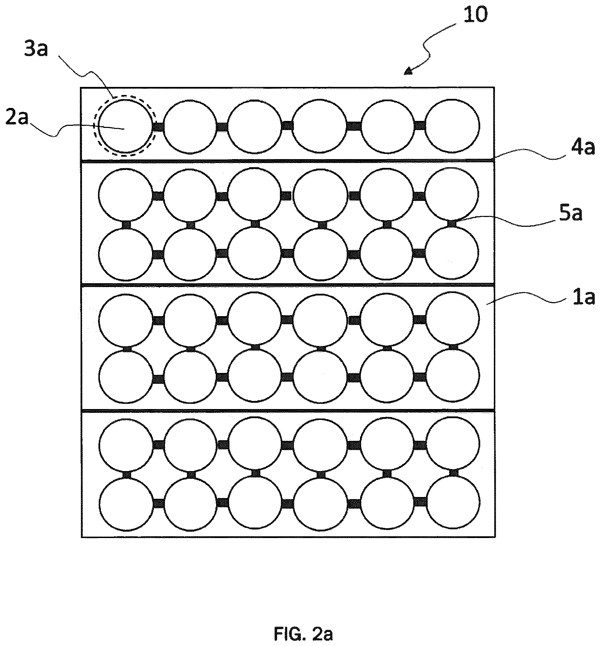

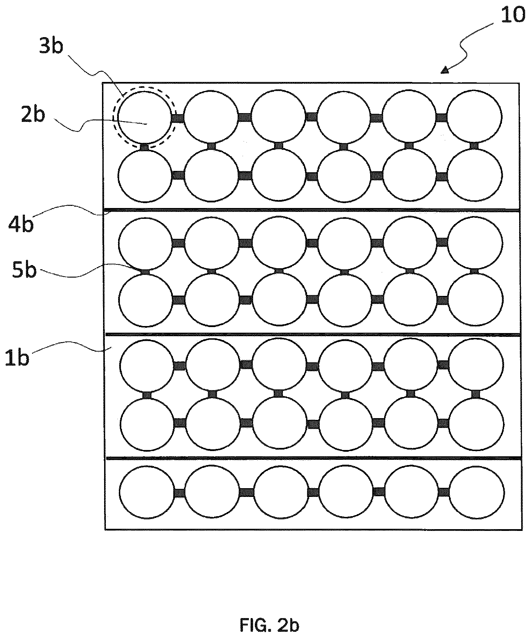

In Ergänzung zu Figur 1 zeigen die Figuren 2a und 2b schematisch beide Seiten eines Batteriepacks gemäß einer Ausführungsform. In Figur 2a entspricht 1a einer oberen Seite der Batteriezellhalterung und in Figur 2b entspricht 1b einer unteren Seite der Batteriezellhalterung. Entsprechend der Seitenkennzeichnung sind in den Figuren 2a und 2b die weiteren Bezugszeichen analog zu Figur 1 mit den Indices a und b gekennzeichnet. Wie in den Figuren 2a und 2b ersichtlich, sind Zellverbinder 5a, 5b beidseitig 1a, 1b der Batteriezellhalterungjeweils versetzt über zwei der N Reihen angeordnet und verschalten die in den Zellhaltern 3a, 3b gelagerten Batteriezellen 2a, 2b miteinander. Auf jeder der beiden Seiten 1a, 1b sind Verstärkungselemente 4a, 4b im Abstand von zwei Reihen jeweils zwischen den N Reihen angeordnet. Die Verstärkungselemente 4a, 4b sind jeweils in einer Längsrichtung höher ausgebildet, als die Zellhalter 3a, 3b, derart, dass sie die über den jeweils zwei der N Reihen angeordneten Zellverbinder 5a, 5b separieren.

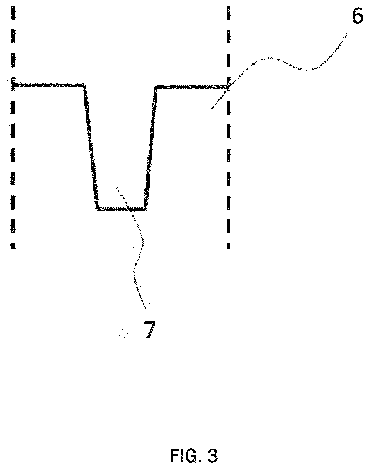

Figur 3 zeigt schematisch ein Verstärkungselement gemäß einer Ausführungsform. Das Verstärkungselement ist hier im Detail gezeigt und ist in dieser Ausführungsform als eine Verstärkungsrippe 6 ausgebildet. Wie durch die gestrichelten Linien in Figur 3 angedeutet, kann eine Verstärkungsrippe 6 jeweils zwischen zwei angrenzenden Zellhaltern angeordnet sein. Die Verstärkungsrippen 6 können dabei in Reihenrichtung zwischen den angrenzenden Zellhaltern angeordnet sein und sich über die gesamte Länge einer Reihe erstrecken. Die Verstärkungsrippen 6 können dabei in einer Längsrichtung höher ausgebildet sein als die Zellhalter.

In einer bevorzugten Ausführungsform können die Verstärkungselemente als Verstärkungsrippen mit mindestens einem Einschnitt ausgebildet sein. Die in der Ausführungsform in Figur 3 gezeigte Verstärkungsrippe 6 weist einen Einschnitt 7 auf. Der Einschnitt 7 kann insbesondere keilförmig ausgebildet sein. Der mindestens eine Einschnitt kann vorteilhaft als eine Art Dehnungsfuge fungieren, welche eine Verformung der Batteriezellhalterung, beispielsweise in Abhängigkeit der Temperatur, verhindern kann. Werden die Zellhalter und die Verstärkungsrippen beispielsweise aus Kunststoff mittels Spritzgussverfahren oder Vakuumgussverfahren einstückig gefertigt, so kann der mindestens eine Einschnitt eine Verformung der resultierenden Batteriezellhalterung während des Abkühlprozesses verhindern.

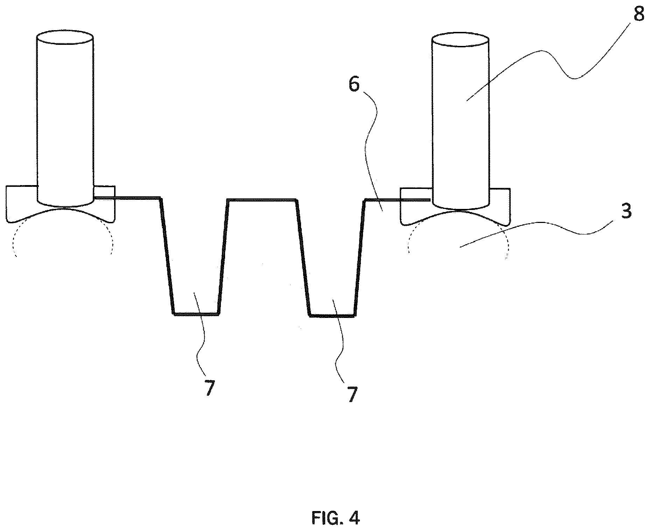

Figur 4 zeigt schematisch einen Ausschnitt eines Batteriepacks gemäß einer Ausführungsform mit Abstandshaltern und einem Verstärkungselement. In der Ausführungsform in Figur 4 ist das Verstärkungselement als Verstärkungsrippe 6 mit zwei Einschnitten 7 ausgebildet. Auch in diesem Fall können die zwei Einschnitte 7 insbesondere keilförmig ausgebildet sein. Im Unterschied zu Figur 3 weisen die in der Ausführungsform in Figur 4 gezeigten Zellhalter 3 jeweils einen stiftförmigen Abstandshalter 8 auf. Die Verstärkungsrippen 6 können sich dabei in Längsrichtung bis unterhalb der Abstandshalter 8 erstrecken, bevorzugt bis in einen Bereich von 1,0 mm bis 0,2 mm, besonders bevorzugt jedoch bis 0,5 mm unterhalb der Abstandshalter 8. Die stiftförmigen Abstandshalter 8 können alternierend zu den Verstärkungsrippen 6 in Reihenrichtung an den Zellhaltern 3 angeordnet sein. Wird der Batteriepack beispielsweise in ein Gehäuse eingebaut, so kann über die Abstandshalter vorteilhaft ein Abstand zur Gehäusewand definiert werden. Auf diese Weise kann das Auftreten von Kriechstrom vermieden werden. Außerdem können die Abstandshalter die Stapelbarkeit der Batteriepacks verbessern.

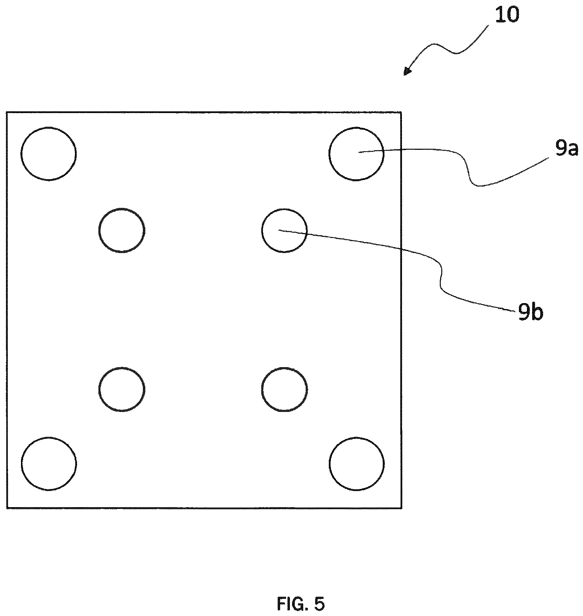

Figur 5 zeigt schematisch eine Ausführungsform eines Batteriepacks mit Durchführungen für Verbindungselemente. In einer bevorzugten Ausführungsform kann der Batteriepack 10 mindestens vier Durchführungen 9a, 9b für Verbindungselemente aufweisen. Die vier Durchführungen können dabei entweder mittig 9b auf dem Batteriepack 10 angeordnet sein oder im Bereich der Ecken 9a des Batteriepacks 10. Vorteilhaft, kann der Batteriepack 10 auch jeweils vier Durchführungen sowohl mittig 9b, als auch im Bereich der Ecken 9a aufweisen. Erfindungsgemäß sind dabei die Durchführungen 9a, 9b in Bezug auf die Verbindungselemente nicht eingeschränkt. Die Verbindungselemente können Steckverbindungen oder auch Schraubverbindungen, etwa Schraube und Mutter, umfassen und die Durchführungen 9a, 9b entsprechend gestaltet sein. Vorteilhaft können die Durchführungen 9a, 9b jedoch für Schraubverbindungen ausgelegt sein. Über die durch die Durchführungen 9a, 9b geführten Verbindungselemente kann der Batteriepack 10 beispielsweise mit einem umgebenden Gehäuse verbunden werden.

Der erfindungsgemäße Batteriepack kann in einem Batteriemodul für Heimanwendungen verwendet werden. Heimanwendungen können dabei insbesondere modulare Speichersysteme sein, welche beispielsweise Ein- oder Mehrfamilienhäuser unabhängig vom öffentlichen Stromnetz machen und über alternative Energiequellen, wie Solarenergie, gespeist werden.

### BEZUGSZEICHEN

- 10: Batteriepack
- 1: Batteriezellhalterung
- 1a: obere Seite der Batteriezellhalterung
- 1b: untere Seite der Batteriezellhalterung
- 2, 2a, 2b: Batteriezelle
- 3, 3a, 3b: Zellhalter
- 4, 4a, 4b: Verstärkungselement
- 5, 5a, 5b: Zellverbinder
- 6: Verstärkungsrippe
- 7: Einschnitt
- 8: Abstandshalter
- 9a, 9b: Durchführung

## Patentansprüche

1. Batteriepack (10) umfassend:
eine Vielzahl an Zellhaltern (3, 3a, 3b) zur Aufnahme von Batteriezellen (2, 2a, 2b), welche in N Reihen und M Spalten angeordnet und integral miteinander verbunden sind, so dass eine flächige Batteriezellhalterung (1) gebildet wird, mit M und N jeweils ≥ 3, wobei die Zellhalter (3, 3a, 3b) in vertikaler Richtung offen ausgebildet sind, derart, dass beide Pole einer darin gelagerten Batteriezelle (2, 2a, 2b) kontaktiert werden können,
eine Vielzahl an Batteriezellen (2, 2a, 2b), welche in den Zellhaltern (3, 3a, 3b) jeweils gleichpolig innerhalb der N Reihen und gegenpolig innerhalb der M Spalten gelagert sind,
eine Vielzahl an Zellverbindern (5, 5a, 5b), welche beidseitig (1a, 1b) der Batteriezellhalterung (1) jeweils versetzt über zwei der N Reihen angeordnet sind und die Batteriezellen (2, 2a, 2b) miteinander verschalten, und
eine Vielzahl an Verstärkungselementen (4, 4a, 4b), welche zwischen den N Reihen jeweils im Abstand von zwei Reihen angeordnet und in einer Längsrichtung höher ausgebildet sind, als die Zellhalter (3, 3a, 3b), derart, dass sie die über den jeweils zwei der N Reihen angeordneten Zellverbinder (5, 5a, 5b) separieren.

2. Batteriepack (10) nach Anspruch 1, wobei M und N jeweils > 10 sind.

3. Batteriepack (10) nach einem der Ansprüche 1 oder 2, wobei die Verstärkungselemente (4, 4a, 4b) integral mit den Zellhaltern (3, 3a, 3b) verbunden sind.

4. Batteriepack (10) nach einem der Ansprüche 1 bis 3, wobei die Verstärkungselemente (4, 4a, 4b) als Verstärkungsrippen (6) mit mindestens einem Einschnitt (7) ausgebildet sind.

5. Batteriepack (10) nach einem der Ansprüche 1 bis 4, wobei die Zellhalter (3, 3a, 3b) und die Verstärkungselemente (4, 4a, 4b) aus Kunststoff gefertigt sind.

6. Batteriepack (10) nach Anspruch 5, wobei der Kunststoff Acryl-Butadien-Styrol (ABS) ist.

7. Batteriepack (10) nach Anspruch 5 oder 6, wobei die Zellhalter (3, 3a, 3b) und die Verstärkungselemente (4, 4a, 4b) mittels Spritzgussverfahren oder Vakuumgussverfahren gefertigt sind.

8. Batteriepack (10) nach einem der Ansprüche 1 bis 7, wobei stiftförmige Abstandshalter (8) alternierend zu den Verstärkungselementen (4, 4a, 4b) in Reihenrichtung an den Zellhaltern (3, 3a, 3b) angeordnet sind.

9. Batteriepack (10) nach Anspruch 8, wobei sich die Verstärkungselemente (4, 4a, 4b) in Längsrichtung bis unterhalb der Abstandshalter (8) erstrecken.

10. Batteriepack (10) nach einem der Ansprüche 1 bis 9, wobei die Batteriezellen (2, 2a, 2b) M parallel und N seriell verschalten sind.

11. Batteriepack (10) nach einem der Ansprüche 1 bis 10, wobei die Batteriezellen (2, 2a, 2b) kunststoffummantelte Rundzellen sind.

12. Batteriepack (10) nach einem der Ansprüche 1 bis 11, wobei die Batteriezellen (2, 2a, 2b) Lithium-Eisenphosphat-Zellen sind.

13. Batteriepack (10) nach einem der Ansprüche 1 bis 12, wobei die Zellhalter (3, 3a, 3b) zylindrisch geformt sind.

14. Batteriepack (10) nach einem der Ansprüche 1 bis 13, wobei der Batteriepack (10) mindestens vier Durchführungen (9a, 9b) für Verbindungselemente aufweist.

15. Verwendung des Batteriepacks (10) nach einem der Ansprüche 1 bis 14 in einem Batteriemodul für Heimanwendungen.

## Claims

1. Battery pack (10) comprising:
a plurality of cell holders (3, 3a, 3b) for receiving battery cells (2, 2a, 2b), which are arranged in N rows and M columns and are integrally connected to one another, so that a planar battery cell holder (1) is formed, with M and N ≥ 3 in each case, wherein the cell holders (3, 3a, 3b) are formed open in the vertical direction in such a way that both poles of a battery cell (2, 2a, 2b) mounted therein can be contacted,
a plurality of battery cells (2, 2a, 2b), which are mounted in the cell holders (3, 3a, 3b) in each case in the same pole within the N rows and in the opposite pole within the M columns,
a plurality of cell connectors (5, 5a, 5b), which are arranged on both sides (1a, 1b) of the battery cell holder (1) in each case offset over two of the N rows and connect the battery cells (2, 2a, 2b) to one another, and
a plurality of reinforcing elements (4, 4a, 4b), which are arranged between the N rows in each case at a distance from two rows and are formed higher in a longitudinal direction than the cell holders (3, 3a, 3b) in such a way that they separate the cell connectors (5, 5a, 5b) arranged over the two of the N rows in each case.

2. Battery pack (10) according to claim 1, wherein M and N are > 10 in each case.

3. Battery pack (10) according to one of claims 1 or 2, wherein the reinforcing elements (4, 4a, 4b) are integrally connected to the cell holders (3, 3a, 3b).

4. Battery pack (10) according to one of claims 1 to 3, wherein the reinforcing elements (4, 4a, 4b) are formed as reinforcing ribs (6) with at least one incision (7).

5. Battery pack (10) according to one of claims 1 to 4, wherein the cell holders (3, 3a, 3b) and the reinforcing elements (4, 4a, 4b) are made of plastic.

6. Battery pack (10) according to claim 5, wherein the plastic is acrylonitrile butadiene styrene (ABS).

7. Battery pack (10) according to claim 5 or 6, wherein the cell holders (3, 3a, 3b) and the reinforcing elements (4, 4a, 4b) are manufactured by means of injection moulding methods or vacuum moulding methods.

8. Battery pack (10) according to one of claims 1 to 7, wherein pin-shaped spacers (8) are arranged alternately to the reinforcing elements (4, 4a, 4b) in the row direction on the cell holders (3, 3a, 3b).

9. Battery pack (10) according to claim 8, wherein the reinforcing elements (4, 4a, 4b) extend in the longitudinal direction to below the spacers (8).

10. Battery pack (10) according to one of claims 1 to 9, wherein the battery cells (2, 2a, 2b) are connected M in parallel and N in series.

11. Battery pack (10) according to one of claims 1 to 10, wherein the battery cells (2, 2a, 2b) are plastic-sheathed round cells.

12. Battery pack (10) according to one of claims 1 to 11, wherein the battery cells (2, 2a, 2b) are lithium iron phosphate cells.

13. Battery pack (10) according to one of claims 1 to 12, wherein the cell holders (3, 3a, 3b) are cylindrically shaped.

14. Battery pack (10) according to one of claims 1 to 13, wherein the battery pack (10) has at least four leadthroughs (9a, 9b) for connecting elements.

15. Use of the battery pack (10) according to one of claims 1 to 14 in a battery module for home applications.

## Revendications

1. Bloc-batterie (10) comprenant :
une pluralité de supports d'éléments (3, 3a, 3b) pour la réception d'éléments de batterie (2, 2a, 2b), lesquels sont disposés en N rangées et M colonnes et reliés les uns aux autres d'un seul tenant, de sorte qu'un dispositif de retenue d'élément de batterie (1) plan est formé, avec M et N respectivement ≥ 3, dans lequel les supports d'éléments (3, 3a, 3b) sont réalisés de manière ouverte dans la direction verticale, de telle sorte que les deux pôles d'un élément de batterie (2, 2a, 2b) monté dans ceux-ci peuvent être mis en contact,
une pluralité d'éléments de batterie (2, 2a, 2b), lesquels sont montés dans les supports d'éléments (3, 3a, 3b) respectivement avec la même polarité à l'intérieur des N rangées et avec la polarité opposée à l'intérieur des M colonnes,
une pluralité de connecteurs d'éléments (5, 5a, 5b), lesquels sont disposés des deux côtés (1a, 1b) du dispositif de retenue d'élément de batterie (1) respectivement de manière décalée au-dessus de deux des N rangées et branchent les éléments de batterie (2, 2a, 2b) les uns aux autres, et
une pluralité d'éléments de renforcement (4, 4a, 4b), lesquels sont disposés entre les N rangées respectivement à distance de deux rangées et réalisés dans une direction longitudinale de manière plus élevée que les supports d'éléments (3, 3a, 3b), de telle sorte qu'ils séparent les connecteurs d'éléments (5, 5a, 5b) disposés au-dessus des respectivement deux des N rangées.

2. Bloc-batterie (10) selon la revendication 1, dans lequel M et N sont respectivement > 10.

3. Bloc-batterie (10) selon l'une quelconque des revendications 1 ou 2, dans lequel les éléments de renforcement (4, 4a, 4b) sont reliés d'un seul tenant aux supports d'éléments (3, 3a, 3b).

4. Bloc-batterie (10) selon l'une quelconque des revendications 1 à 3, dans lequel les éléments de renforcement (4, 4a, 4b) sont réalisés sous la forme de nervures de renforcement (6) avec au moins une entaille (7).

5. Bloc-batterie (10) selon l'une quelconque des revendications 1 à 4, dans lequel les supports d'éléments (3, 3a, 3b) et les éléments de renforcement (4, 4a, 4b) sont fabriqués en matière plastique.

6. Bloc-batterie (10) selon la revendication 5, dans lequel la matière plastique est l'acrylonitrile-butadiène-styrène (ABS).

7. Bloc-batterie (10) selon la revendication 5 ou 6, dans lequel les supports d'éléments (3, 3a, 3b) et les éléments de renforcement (4, 4a, 4b) sont fabriqués au moyen de procédés de moulage par injection ou de procédés de coulée sous vide.

8. Bloc-batterie (10) selon l'une quelconque des revendications 1 à 7, dans lequel des éléments d'écartement (8) en forme de tige sont disposés en alternance par rapport aux éléments de renforcement (4, 4a, 4b) dans la direction des rangées sur les supports d'éléments (3, 3a, 3b).

9. Bloc-batterie (10) selon la revendication 8, dans lequel les éléments de renforcement (4, 4a, 4b) s'étendent dans la direction longitudinale jusqu'au-dessous des éléments d'écartement (8).

10. Bloc-batterie (10) selon l'une quelconque des revendications 1 à 9, dans lequel les éléments de batterie (2, 2a, 2b) M sont branchés en parallèle et N en série.

11. Bloc-batterie (10) selon l'une quelconque des revendications 1 à 10, dans lequel les éléments de batterie (2, 2a, 2b) sont des éléments ronds enrobés de matière plastique.

12. Bloc-batterie (10) selon l'une quelconque des revendications 1 à 11, dans lequel les éléments de batterie (2, 2a, 2b) sont des éléments en lithium-phosphate de fer.

13. Bloc-batterie (10) selon l'une quelconque des revendications 1 à 12, dans lequel les supports d'éléments (3, 3a, 3b) sont formés de manière cylindrique.

14. Bloc-batterie (10) selon l'une quelconque des revendications 1 à 13, dans lequel le bloc-batterie (10) présente au moins quatre traversées (9a, 9b) pour des éléments de liaison.

15. Utilisation du bloc-batterie (10) selon l'une quelconque des revendications 1 à 14 dans un module de batterie pour des utilisations domestiques.
